# FASCICULE DE BREVET EUROPEEN

(11) **EP 0 358 791 B1**
(45) Date de publication et mention de la délivrance du brevet: **10.03.1993**
(21) Numéro de dépôt: 88114994.2
(22) Date de dépôt: 14.09.1988
(51) Int. Cl.: A23L 1/325

(54) **Procédé de fabrication de produits de poissons façonnés**
Verfahren zur Herstellung geformter Fischprodukte
Process to produce shaped fish products

(43) Date de publication de la demande: 21.03.1990
(73) Titulaire: FRISCO-FINDUS AG, CH-9400 Rorschach (CH)
(72) Inventeur: Clairouin Noel, F-62360 Condette (FR); Guéroult, Alain, F-60 000 Goincourt (FR); Lemoyne, Rémi, CH-1800 Vevey (CH)

(56) Documents cités:
- FR-A- 2 058 545
- FR-A- 2 106 170
- FR-A- 2 137 873
- FR-A- 2 544 177

## Description

La présente invention se rapporte à la mise en forme de poisson.

On sait fabriquer par exemple selon le brevet FR-A-1.595.605, un pain de poisson par moulage de filets de poisson sans peau dans une forme cylindrique, puis congélation. Un tel pain peut être ensuite débité en tranches.

Selon un autre procédé, par exemple décrit dans les brevets FR-A-1.472.494 et FR-A-2.106.170, on place les filets sans peau dans une enveloppe puis on les congèle. Dans ces procédés, la cohésion entre les morceaux est assurée par la présence d'un liant dont on les a enrobés préalablement au façonnage ou par agglutination de ceux-ci entre par un salage préalablement à la mise en forme et d'un fumage postérieurement à celle-ci.

Nous avons trouvé qu'on pouvait, à partir de filets de poissons crus, façonner un produit qui, un fois découpé en tranches, se rapproche des darnes de poisson au naturel avec la peau, mais toutefois sans arête.

Selon l'invention, la cohésion des tranches ne nécessite pas, comme dans les procédés connus, la présence de liant ou des opérations de salage et de fumage. Toutefois, ces moyens connus sont compatibles avec la présente invention, de même que l'addition d'autres agents de texture.

L'invention concerne donc un procédé de fabrication d'un produit de poisson façonné constitué à l'extérieur de peau de poisson et à l'intérieur de chair de poisson sans arête, caractérisé par le fait que l'on place des filets crus et qu'on les comprime dans un boyau dont l'une des extrémités a été préalablement fermée, de manière que des filets avec peau couvrent pratiquement la surface intérieure du boyau avec la peau à l'extérieur et que des filets sans peau occupent l'espace central du dit boyau, que l'on ferme l'extrémité libre du dit boyau et qu'on le congèle.

Suivant l'invention, le poisson destiné à la préparation des produits façonnés est sous forme de filets. Par filets, on entend non seulement les filets entiers mais également des morceaux de filets ou des rubans de poissons crus de dimension appropriée. Pour obtenir des produits de la meilleure qualité, il est préférable d'éliminer les parties souillées de sang et autres parties ayant subi une altération de coloration.

Comme indiqué précédemment, certains filets qui constitueront l'extérieur du produit façonné doivent avoir été levés dans le poisson cru sans écorchement et donc être revêtus de toute la peau. Les filets avec peau peuvent être parés avec une coupe droite en biais de la partie proche du bas de la tête ou avec une coupe en V permettant d'éliminer les grandes arêtes latérales tout en maintenant l'extrémité antérieure des flancs. Un filet de l'extérieur pèse avantageusement 250 à 350 g.

Par contre, d'autres filets qui sont placés au centre du produit façonné doivent avoir été levés et écorchés de manière qu'il n'y ait plus de peau. Avantageusement, ils comprennent également l'extrémité antérieure des flancs résultant d'une coupe en V. De préférence, les filets du centre sont plus petits que les filets de l'extérieur du produit façonné et un filet du centre représente en poids 15 à 55% d'un filet de l'extérieur, soit environ 50 à 150 g.

Ce qui est souhaité, c'est l'obtention d'un "saucisson" de poisson avec un bon recouvrement de la surface extérieure avec de la peau. On a constaté que le résultat est obtenu lorsque les filets extérieurs constituent de préférence 35 à 55% en poids des filets du centre.

Selon l'invention, on remplit un boyau de filets, par exemple au moyen d'une embosseuse utilisée en charcuterie et on ferme les extrémités du boyau de manière à réaliser un saucisson. Pour ce faire, on peut utiliser un boyau animal naturel ou une enveloppe en matériau plastique souple et résistant de qualité alimentaire. Le rôle du boyau est de maintenir le saucisson en forme durant l'opération de congélation.

On peut utiliser les différentes espèces de poisson qui sont normalement présentées en tranches transversales ou darnes, par exemple le cabillaud, la morue, l'aiglefin, le saumon.

Les saucissons sont ensuite congelés et peuvent être entreposés pour une utilisation différée ou être traités pour confectionner des plats préparés. Dans ce dernier cas, on extrait le pain congelé de son boyau, par exemple en trempant le saucisson dans l'eau chaude puis en l'incisant longitudinalement au moyen d'un outil tranchant. On scie ensuite le pain libéré transversalement en darnes et on emballe les darnes individuellement dans des sachets, de préférence en matériau étanche à l'air, et de préférence sous vide. On peut de préférence glacer la surface des darnes, par exemple par pulvérisation d'eau. Le glaçage évite une exsudation d'eau et de jus. En variante, on peut ajouter un agent de rétention d'eau aux filets, par exemple un polyphosphate. On ajoute de préférence une sauce dans le sachet avant de le fermer hermétiquement.

Les exemples ci-après illustrent l'invention au moyen des dessins annexés. Dans ces exemples, les parties et pourcentages sont pondéraux, sauf indication contraire.
La figure 1 illustre les découpes des filets,
la figure 2 est une représentation schématique d'un mode de réalisation du procédé,
la figure 3 est une représentation schématique du positionnement des filets dans une variante du procédé et
la figure 4 illustre une darne.

### Exemple 1

On élimine les grandes arêtes latérales 1 de filets 2 de cabillaud cru levés avec leur peau 3 par une coupe en biais qui enlève également la partie antérieure des flancs 4 comme illustré à la figure la. Ces filets ont en moyenne 280 g et 40 cm de long ou 320 g et 45 cm de long.

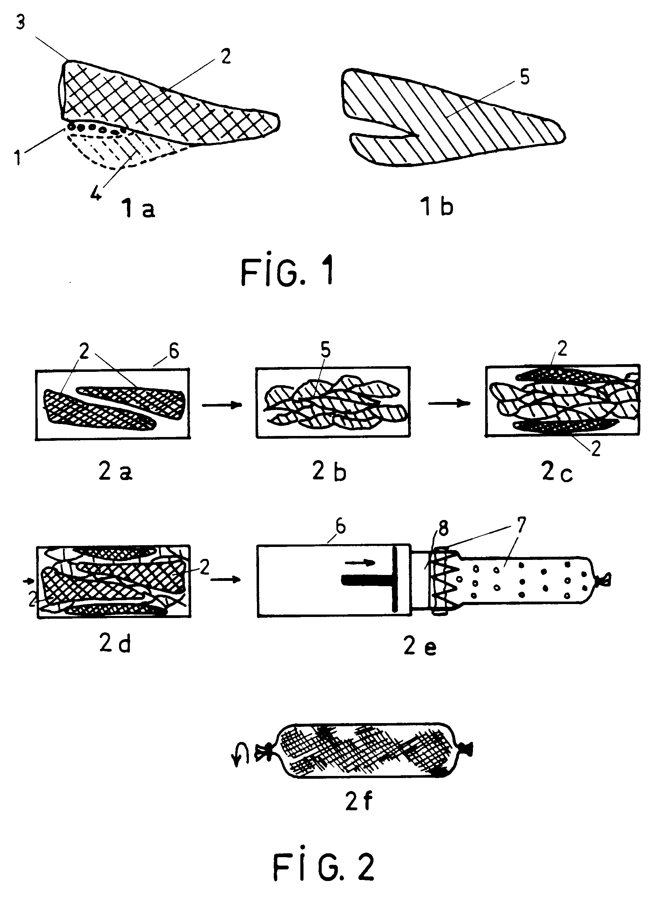

On prépare des filets sans peau 5 de 100 g en moyenne à partir de moruettes (petites morues) par levage des filets, coupe en V et écorchement représentés à la figure 1 b. La préparation des saucissons est illustrée schématiquement à la figure 2.

On dispose ensuite deux filets avec peau 2 dans le fond de la chambre de formage cylindrique 6 d'une embosseuse à jambon avec embout rétractable, la chambre ayant une longueur de 500 mm et un diamètre de 90 mm, avec la peau 3 tournée vers l'extérieur et de manière que les deux poissons regardent les extrémités de la chambre 6, sans chevauchement (figure 2 a).

Vers le centre de la chambre, on tasse 1,5 kg de petits filets sans peau 5 de manière à éviter les trous d'air (figure 2 b).

De chaque côté de la chambre 6, on place un filet 2 avec la peau dirigée vers l'extérieur (figure 2 c).

On recouvre enfin les petits filets avec deux filets avec peau 2 que l'on dispose de manière que les deux poissons regardent les extrémités de la chambre 6, sans chevauchement, puis on referme la chambre 6 (figure 2 d). Les six filets avec peau pèsent 1,5 kg.

On trempe un boyau perforé 7 en viscose, de diamètre 90 mm, précoupé à une longueur de 0,9 m dans de l'eau froide en veillant à ce que l'intérieur du boyau soit bien humecté, et l'une de ses extrémités ayant été fermée par le fabricant ou par une clippeuse tendeuse non représentée, on retrousse l'autre extrémité sur l'embout rétractable 8 de la chambre 6, puis on pousse les filets tels que disposés à l'intérieur du boyau 7 (figure 2 e) et on ferme l'extrémité retroussée du boyau à l'aide de la clippeuse tendeuse. Cet appareil étire le boyau, le comprime en évacuant de l'eau et ferme son extrémité ouverte. Le saucisson est représenté à la figure 2 f.

On met alors les saucissons accolés bout à bout sur les grilles d'un chariot puis on les surgèle en chambre à -30°C.

### Exemple 2

On étête les cabillauds crus entiers vidés, on lève les filets 2 en gardant la peau 3, puis on les pare manuellement en pratiquant une coupe en V qui élimine les grandes arêtes latérales tout en maintenant la partie antérieure des flancs comme indiqué à la figure 1 b mais avec la peau. Les filets avec peau représentent 43% du poids total des filets.

On prépare des filets sans peau 5 par étêtage, filetage et pelage de cabillauds entiers crus vidés, puis on élimine les grandes arêtes tout en maintenant la partie antérieure des flancs par une coupe en V. Ces derniers représentent 57% du poids total des filets.

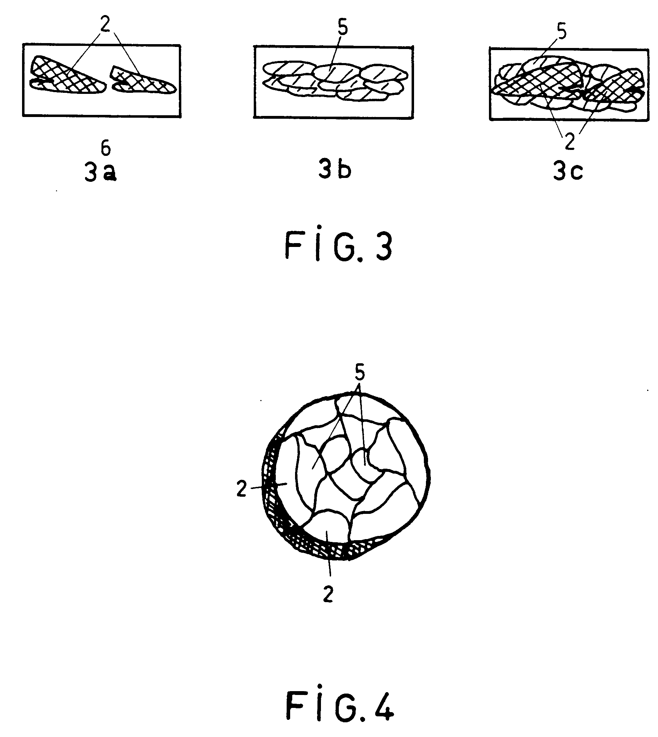

On dispose ensuite deux filets avec peau 2 dans le fond de la chambre de formage d'une embosseuse avec la peau à l'extérieur, mais à la différence de l'exemple 1, les deux filets regardent vers la même extrémité de la chambre comme représenté à la figure 3 a.

On injecte au moyen d'une pompe volumétrique à chambre des filets sans peau 5 dans la partie centrale de la chambre de formage 6 (figure 3 b). On recouvre alors les filets sans peau 5 avec deux filets avec peau 2 disposés avec la peau vers l'extérieur, les deux filets regardant l'extrémité de la chambre opposée à celle que regardent les filets avec peau disposés au fond de la chambre (figure 3 c).

On remplit alors les boyaux de 90 mm de diamètre, découpés à 0,8 m et fermés à une extrémité, ayant été préalablement réhydratés 20 minutes dans l'eau à 50°C, en appliquant l'extrémité de boyau retroussée à 50 mm sur l'embout rétractable de l'embosseuse sous une pression de 3 bars, puis on clippe le boyau à son extrémité ouverte. Enfin, on surgèle les saucissons à plat dans un tunnel de surgélation. La température de -18°C à coeur est atteinte en 2 heures 30 minutes environ. Après congélation, les saucissons ont un diamètre moyen de 93 mm et une longueur moyenne de 470 mm.

### Exemple 3

A l'aide d'un outil tranchant, on pratique sur le boyau du saucisson deux incisions longitudinales et diamétralement opposées, puis on trempe le saucisson congelé dans l'eau à 50°C pendant 30 secondes. On arrache ensuite le boyau en tirant par les extrémités et on libère le pain de poisson.

A l'aide d'une scie, on découpe le pain de poisson latéralement en tranches de 15,5 mm d'épaisseur. On obtient ainsi des darnes avec peau sans arêtes, représentées à la figure 4.

On dose 75 g de sauce au beurre dans des sachets rectangulaires en matériau plastique étanche à l'air, scellés sur 3 côtés, par un petit côté, puis on y dispose une darne de 100 g dont les faces ont été préalablement glacées par pulvérisation d'eau froide sur la darne congelée, puis on ferme les sachets sous vide et on les entrepose à -20°C.

A la préparation, on place les sachets dans l'eau bouillante jusqu'à cuisson. Les darnes se tiennent parfaitement. Elles ont un aspect naturel mais ne présentent pas d'arête centrale.

## Revendications

1. Procédé de fabrication d'un produit de poisson façonné constitué à l'extérieur de peau de poisson et à l'intérieur de chair de poisson sans arête, caractérisé par le fait que l'on place des filets crus et qu'on les comprime dans un boyau dont l'une des extrémités a été préalablement fermée, de manière que les filets avec peau couvrent pratiquement la surface intérieure du boyau avec la peau à l'extérieur et que des filets sans peau occupent l'espace central du dit boyau, que l'on ferme l'extrémité libre du dit boyau et qu'on le congèle.

2. Procédé selon la revendication 1, caractérisé par le fait que l'on place successivement dans la chambre de formage cylindrique d'une embosseuse:
- en dessous, deux filets avec peau, en position tête-bêche avec la peau contre le fond,
- au milieu plusieurs filets sans peau,
- de chaque côté, un filet avec peau, avec la peau contre la paroi latérale,
- au dessus, deux filets avec peau, en position tête-bêche avec la peau vers le haut.

3. Procédé selon la revendication 2, caractérisé par le fait que les filets avec peau de la couche du dessous sont placés de manière à regarder la même extrémité de la chambre de formage, qu'il n'y a pas de filet avec peau sur les côtés et que les filets avec peau de la couche du dessus sont placés de manière à regarder l'extrémité de la chambre opposée à celle que regardent les filets avec peau disposés au fond de la chambre.

4. Procédé selon la revendication 1, caractérisé par le fait que l'on extrait le produit congelé du boyau puis qu'on le scie transversalement en tranches.

5. Procédé selon la revendication 4, caractérisé par le fait que l'on glace la surface des tranches à l'eau.

6. Procédé selon la revendication 4 ou 5, caractérisé par le fait que l'on emballe les tranches sous vide dans des sachets étanches à l'air.

7. Procédé selon la revendication 6, caractérisé par le fait que l'on ajoute une sauce avant la fermeture des sachets.

8. Procédé selon l'une des revendications 1 à 7, caractérisé par le fait que le poisson mis en oeuvre est le cabillaud.

9. Procédé selon l'une des revendications 1 à 7, caractérisé par le fait que le poisson mis en oeuvre est le saumon.

## Claims

1. A process for the production of a shaped fish product consisting of fish skin on the outside and of boneless fish flesh on the inside, characterized in that raw fillets are placed and then compressed in a casing closed beforehand at one end so that fillets with skin cover substantially the entire inner surface of the casing with the skin on the outside and skinless fillets occupy the central space of the casing, in that the open end of the casing is closed and the filled casing is frozen.

2. A process as claimed in claim 1, comprising successively placing in the cylindrical moulding chamber of a filling machine:
- at the bottom, two fillets with skin arranged head-to-tail with the skin against the base,
- at the centre, several skinless fillets,
- on either side, a fillet with skin with the skin against the side wall,
- at the top, two fillets with skin arranged head-to-tail with the skin on top.

3. A process as claimed in claim 2, characterized in that the fillets with skin of the bottom layer are arranged in such a way that they face the same end of the moulding chamber, in that there is no fillet with skin at the sides and in that the fillets with skin of the top layer are arranged to face that end of the chamber opposite the end faced by the fillets with skin placed at the bottom of the chamber.

4. A process as claimed in claim 1, characterized in that the frozen product is withdrawn from the skin and then sawn transversely into slices.

5. A process as claimed in claim 4, characterized in that the slices are surface-glazed with water.

6. A process as claimed in claim 4 or 5, characterized in that the slices are wrapped **in vacuo** in air-tight bags.

7. A process as claimed in claim 6, characterized in that a sauce is added before the bags are closed.

8. A process as claimed in any of claims 1 to 7, characterized in that the fish used is cod.

9. A process as claimed in any of claims 1 to 7, characterized in that the fish used is salmon.

## Patentansprüche

1. Verfahren zum Herstellen eines geformten Fischproduktes, welches an der Außenseite aus Fischhaut und im Inneren aus grätenlosem Fischfleisch gebildet ist, dadurch gekennzeichnet, daß rohe Filets in einem Schlauch angeordnet und zusammengepreßt werden, dessen eines Ende zuvor verschlossen wurde, wobei die Filets mit Haut praktisch die Innenfläche des Schlauches mit nach außen gekehrter Haut bedecken und die Filets ohne Haut den Raum in der Mitte des Schlauches einnehmen, daß das freie Ende des Schlauches verschlossen wird und daß der Schlauch eingefroren wird.

2. Verfahren nach Anspruch 1, dadurch gekennzeichnet, daß in der zylindrischen Formkammer einer Presse nacheinander angeordnet werden:
- zuunterst zwei Filets mit Haut in einander entgegengesetzter Lage, wobei die Haut nach unten gekehrt ist,
- in der Mitte mehrere Filets ohne Haut,
- auf jeder Seite ein Filet mit Haut, wobei die Haut der Seitenwand zugekehrt ist, und
- zuoberst zwei Filets mit Haut in einander entgegengesetzter Lage, wobei die Haut nach oben gekehrt ist.

3. Verfahren nach Anspruch 2, dadurch gekennzeichnet, daß die Filets mit Haut der unteren Lage so angeordnet werden, daß sie dem gleichem Ende der Formkammer zugekehrt sind, daß auf den Seiten keine Filets mit Haut angeordnet werden und daß die Filets mit Haut der oberen Lage so angeordnet werden, daß sie dem Ende der Kammer zugekehrt sind, das jenem Ende gegenüberliegt, welchem die am Boden der Kammer angeordneten Filets mit Haut zugekehrt sind.

4. Verfahren nach Anspruch 1, dadurch gekennzeichnet, daß das gefrorene Produkt aus dem Schlauch herausgezogen und dann quer in Schnitten zersägt wird.

5. Verfahren nach Anspruch 4, dadurch gekennzeichnet, daß die Oberfläche der Schnitten mit Wasser glaciert wird.

6. Verfahren nach Anspruch 4 oder 5, dadurch gekennzeichnet, daß die Schnitten bei Unterdruck in luftdichte Säckchen verpackt werden.

7. Verfahren nach Anspruch 6, dadurch gekennzeichnet, daß vor dem Schliessen der Säckchen eine Sauce hinzugefügt wird.

8. Verfahren nach einem der Ansprüche 1 bis 7, dadurch gekennzeichnet, daß der verwendete Fisch Kabeljau ist.

9. Verfahren nach Anspruch 1 bis 7, dadurch gekennzeichnet, daß der verwendete Fisch Lachs ist.
